# EUROPEAN PATENT APPLICATION

(11) **EP 0 550 078 A1**
(43) Date of publication of application: **07.07.1993**
(21) Application number: 92200018.7
(22) Date of filing: 03.01.1992
(51) Int. Cl.: B29C 65/02, B29D 24/00

(54) **Method for manufacturing a structural member and structural member formed by using said method**

(71) Applicant: 3P-Consulting Inc., Newmarket, Ontario L3Y 4W1 (CA)
(72) Inventor: Hödl, Herbert, 3P-Consulting Inc., Newmarket, Ontario L3Y 4W1 (CA)
(74) Representative: Pratt, Richard Wilson

(57) **Abstract**

The invention relates to a method for manufacturing a structural member having two outer faces and a core between said outer faces, whereby the core comprises ribs extending between said outer faces and transverse to each other so as the define a plurality of channels between said outer faces. At least two individual components at least partly made of the thermoplastic material, are arranged adjacent each other, whereby at least one of said components comprises a number of ribs, said ribs defining channels which are open at at least one end. Thereafther the components are placed between two pressing members, whereby at least one of said pressing mem-bers is heated and the components are pressed at a side with open ends of the channels by means of the heated pressing member in such a way, that the parts of the components contacting the heating pressure member are melted. Thereby the components are fused together and the ends of the channels are at least partly closed by deforming of the edges of the components contacting the heated pressing member.

## Description

The invention relates to a method for manufacturing a structural member having two outer faces and a core between said outer faces, whereby the core comprises ribs extending between said outer faces and transverse to each other so as to define a plurality of channels between said outer faces.

Such structural members in the form of light weight, stiff structural panels, beams or structural assemblies are generally used in various industries such as the building industry for partition walls, panels, doors, flooring etc. or the transportation industry for aircraft panels and flooring, etc. In some cases said structural members are defined as honeycomb structures.

US-A-4,315,050; 4,902,365; 3,257,260; 4,496,024; 4,440,591 and 4,608,109 all refer to a structural member having an inner low weight core material and to methods how to join (a) a seperate outer layer(s) of material to such a light weight core panel.

In US-A-4,113,909 there has been disclosed a technique, whereby a sheet of thermoplastic material is placed between two heated platens containing a plurality of vented openings. The thermoplastic material is softened and molten and adheres to the platens because of hot tack adhesion. Then the platens are moved apart and due to the venting by the vented openings the thermoplastic material takes on a new internal geometry and expanded panels result after the necessary cooling. The resulting panel is structurally strong and of light weight with honeycomb like internal structure, i.e. a plurality of voids surrounded by rib members of thermoplastic material.

This known technique according US-A-4,113,909 produces panels which are similar in appearance and structure as the panels obtained according the first cited patents, however without the addition of seperate outer layers; however it requires relatively long cycle time to produce the same and its internal structure is not as uniform. Moreover this method according US-A-4,113,909 does not allow to completely close the surfaces which are in contact with the heated platens.

It is an object of the present invention to manufacture a structural member having a more or less honeycomb like structure with a substantially uniform and defined inner structure and whereby an outer face may have voids in its surface or can be completely closed.

According to the invention this can be obtained by a method as defined above in performing the steps of:
a) arranging adjacent each other at least two individual components at least partly made of a thermoplastic material, whereby at least one of said components comprises a number of ribs, said ribs defining channels which are open at at least one end,
b) placing said components between two pressing members whereby at least one of said pressing members is heated,
c) pressing the components at a side with open ends of the channels by means of the heated pressing member in such a way, that the parts of the components contacting the heated pressing member are melted, whereby the components are fused together and said ends of the channel are at least partly closed by deforming of the edges of the components contacting the heated pressing member.

The invention will be further explained by means of the enclosed drawings wherein:
Figure 1 shows a type of extruded multi wall sheet i.e. a double wall sheet used for forming components of a structural member according the invention.
Figure 2 shows how a number of double wall sheets can be cut for forming components of a structural member.
Figure 3 shows some components for forming a structural member according the invention adjacent each other.
Figure 4 shows schematically the arrangement of a number of components in a press.
Figure 5 shows on a greater scale a cross-section over part of figure 4.
Figure 6 shows a detail of a structural member made according the invention.
Figure 7 and 8 show some possibilities for arranging components for forming a structural member with respect to each other.
Figure 9-12 show further embodiments of components for forming a structural member according the invention.
Figure 13 shows schematically the components shown in figure 2 positioned in a press.
Figure 14 shows schematically a structural member made from the components shown in figure 12.
Figure 15, 16, 17 and 18 show some alternative configurations for multi wall sheets that can be used in the method of the invention instead of the double wall sheet shown in figure 1.

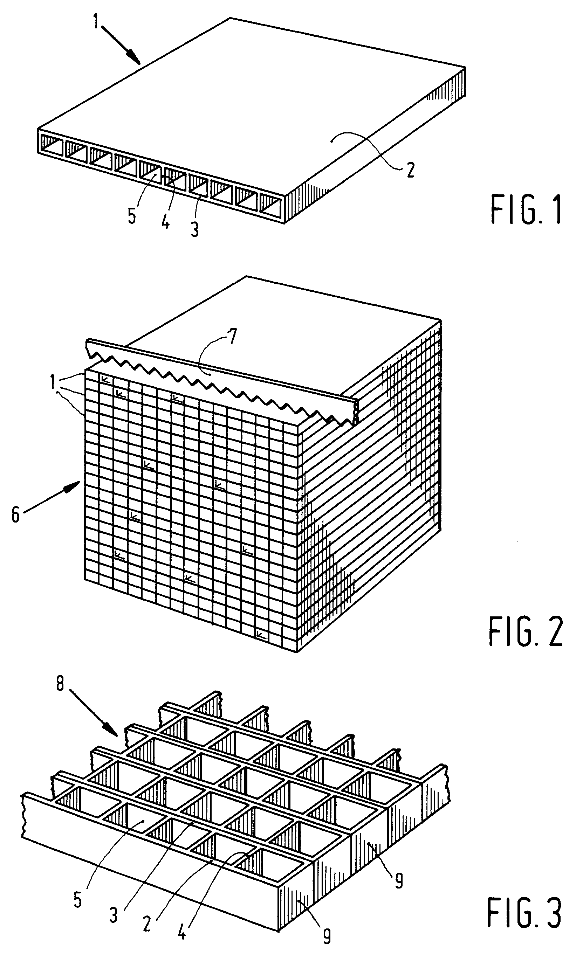

Figure 1 shows a structural multi wall sheet, which is an extruded sheet like product 1 consisting of a upper thin wall sheet 2 and a lower thin wall sheet 3 spaced apart by thin ribs 4 extending between the sheets 2 and 3 and defining hollow channels 5. Such structural sheets 1 are typically extruded in a width up to three meters and an overall gauge of three to seventy five millimeters. The walls 2 and 3 and spacer ribs 4 can be varied independently in thickness, and are typically 0.2 to 2.5 millimeters.

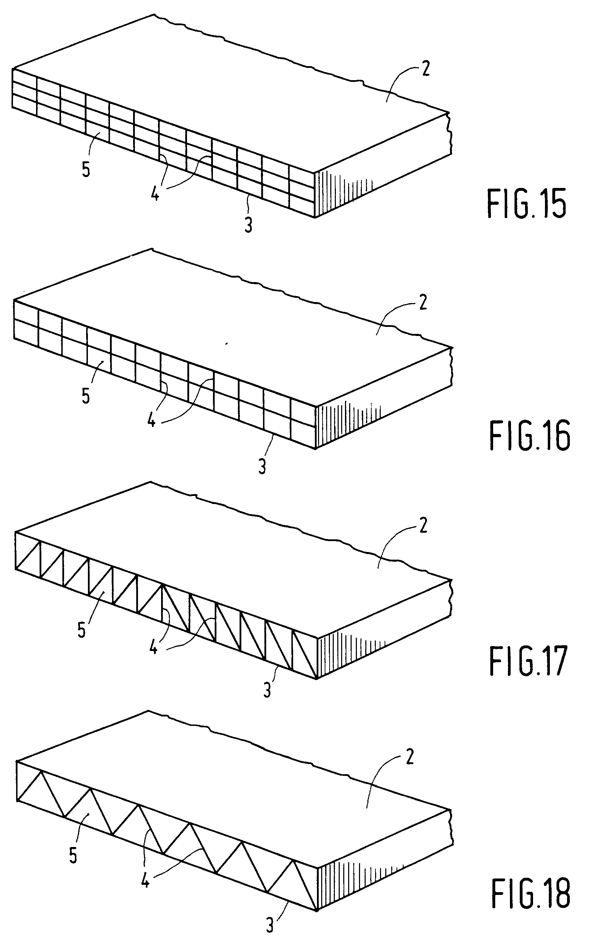

Instead of the structural sheet having two parallel wall portions 2 and 3 there are also available sheets with three or more of such parallel layers interconnected by ribs. Such structural sheets with three or more layers can be used in accordance with the invention in the same way as described below with respect to the structural sheet having only two wall sheets 2 and 3. Other possibilities are shown in figures 15, 16, 17 and 18. Those figures show an extruded sheet like product 1 consisting of an upper thin wall sheet 2 and 3 a lower thin wall sheet 3 spaced apart by thin ribs 4 making various angles with sheets 2 and 3 and possibly other ribs extending more or less parallel between sheets 2 and 3. Still other configurations will be possible.

This type of multi wall structural sheet has very good mechanical properties in relation to its weight, in particular in the direction of the extruded ribs 4.

As shown in figure 2 a number of said structural sheets, each having a total thickness of about 12 millimeters and a length and width of about one meter, can be put on top of each other to form a block 6 which a heigth, width and length of about one meter.

Then a hot knife, laser cutter or water cutter or any other cutting device 7 schematically shown in figure 2 can be used in cutting slices from the block 6 perpendicular to the ribs 4 of the various structural sheets 1, each slice being e.g. 5 centimeters wide, so that there are formed assemblies in the configuration of an open grille 8 (figure 3) with the dimensions of 100x100x5 centimeters, each assembly consisting of a number of components 9 arranged adjacent each other.

It will be clear, that each component 9 consists of parts of the thin wall sheets 2 and 3 as well as parts of the ribs 4 defining the hollow channels 5.

It will be clear, that such a grille like assembly 8 can be formed also by arranging adjacent each other a number of components formed by cutting strips e.g. having a width of 5 centimeters, from a single structural sheet 1.

In both cases is it optional to apply a thin layer of adhesive or solvent, depening on the type of material used for the structural sheets 1, between the adjacent components 9 to make it easier to handle the grille like assembly 8 and to enhance the mechanical properties of the structural member formed as described below.

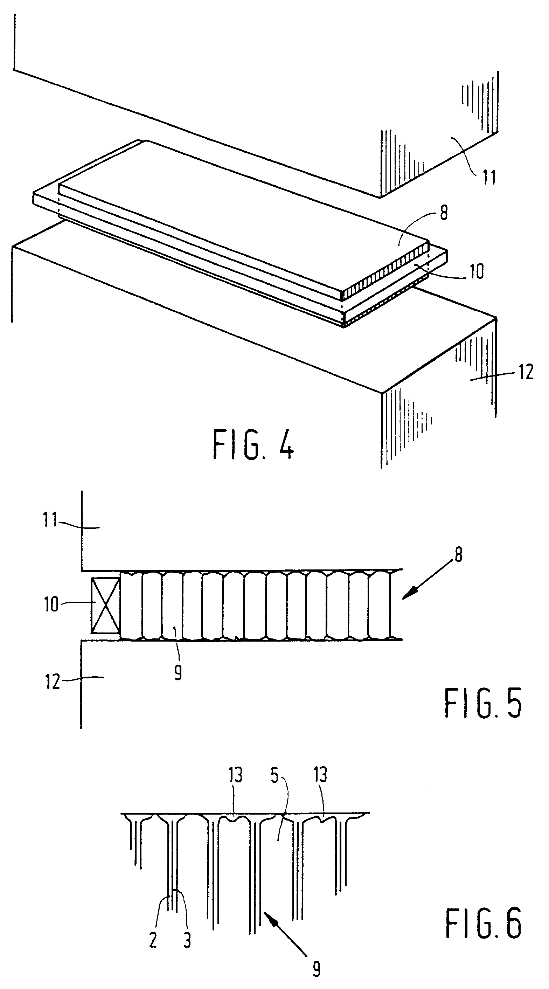

As further shown in figure 4 the grille like assembly 8 can be placed in a frame, fixture of containment 10, if necessary, in order to maintain the adjacent components 9 of the assembly 8 in the desired position. Then, as further shown in figure 4 the grille like assembly can be placed between platens 11 and 12 forming pressing members, which can be moved towards and away from each other in order to apply a relatively low pressure on the grille like assembly 8, especially on the edges of the parts 2-4. Further at least one of said platens 11 and 12, however generally both platens 11 and 12 are heated.

Under heat and low pressure the edges of the wall parts 2 and 3 and of the ribs 4 of the components 9 will be melted, deformed and fused together, whereby the upper and lower ends of the channels 5 will be closed at least partly by melted and deformed portions 13 of the edges of said wall parts 2 and 3 and ribs 4. So after cooling there will be obtained a very rigid honeycomb structure.

Depending on the thickness of the portions 2, 3 and 4 of the structural sheet 1 and the distance between said portions and further depending on a given travel of the hot platens 11 and 12 towards each other either an open poreus or a closed surface formed by the melted and deformed parts 13 will be obtained.

Further within the scope of the invention the faces of the platens 11 and/or 12 can be flat or contoured to shape the faces of the structural member obtained from the components 9 as described above. Further the platens 11 and/or 12 can be provided with pins to enter in or to penetrate through the components 9 so that the final structural member formed from the components 9 will have apertures with virtually the same dimensions as said pins which are preferably heated also.

It will be clear, that at any given configuration of the surfaces of the components 9 opposite the platens 11 and 12 prior to closing and melting under pressure of said surfaces the distance of the travel of the platens 11 and 12 of the press will determine the final resulting surface. If the objective is to close the surface of the final structural member or honeycomb panel completely it is advisable to calculate the volume of material needed to close the surface and increase the height of the components 9 accordingly. The initial height of the components 9 is in all cases higher than the height of the final structural member.

In order to achieve rapid production cycles with minimum pressure the heat of the platens 11 and 12 should be well above the softening/melting temperature of the thermoplastic material used (typically 10 degrees C) and it is advisable to have said hot platens 11 and 12 coated with a non sticking heat resistant surface coating, e.g. with teflon, in order to enable the removal of the structural member made from the components 9 while it is still above the glass transition temperature of the thermoplastic material at the contacting surfaces.

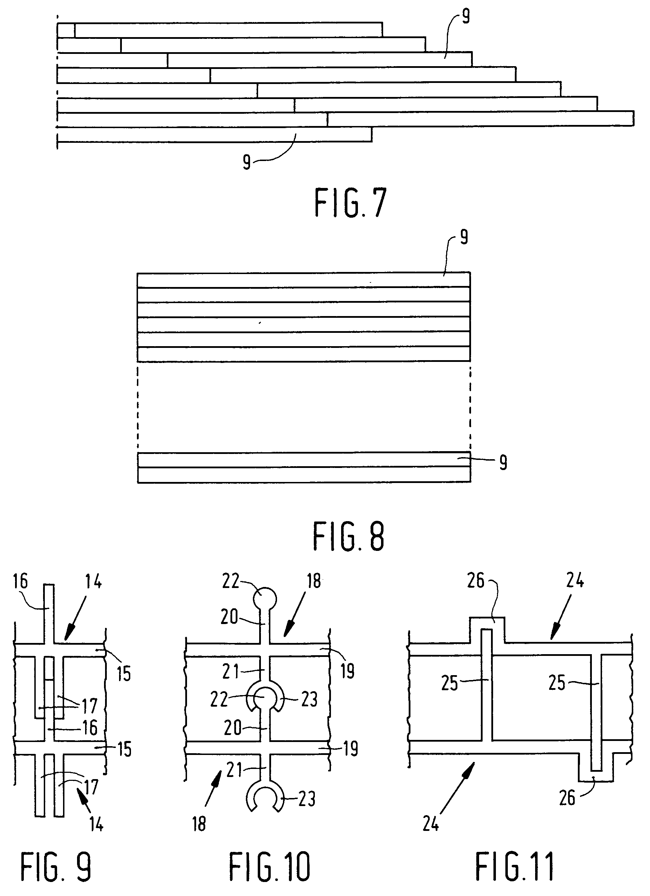

As further shown in figure 7 the components 9 can be arranged in a staggering relationship or, as shown in figure 8 said components 9 can be placed next to each other. In both cases is it possible to move said components, arranged as shown in figure 7 or arranged as shown in figure 8 continuously through a press having pressing members formed by platens as shown in figure 4 or a press having pressing members formed by belts or heated rolls, etc. Thereby can be producted structural members forming beams or panels or the like with virtually no limit in size.

Structural sheets 1 as described above have an ideal material-configuration to be used for such structural members because the upper and lower surfaces 2 and 3 of the structural sheet 1 form a double ribbing 2, 3 as will be clear from figure 6 resulting in the highest strength in the final structural member in the direction of said double ribbing 2, 3. This can be further influenced by the choice of thickness of the parts 2-4 of the structural sheet 1.

However within the scope of the invention it is possible to use other extruded or injection/compression molded elements.

So figure 9 shows two adjacent components 14 each comprising a wall portion 15. On one side of said wall portion there is a rib 16 extending perdendicular to said saide of wall portion 15. On the opposite side of wall portion 15 there are two parallel ribs 17 extending perpendicular to said side of wall portion 15. As swon in figure 9 rib 16 of one component 14 fits in the space between the ribs 17 of the other component 14.

It will be clear, that a number of said components 14, having the desired width, can be cut from an elongated element, which is formed by extrusion of injection/compression molding.

Figure 10 shows a similar arrangement of two adjacent components 18 each having a wall portion 19 and ribs 20 and 21 being in line with each other and extending perpendicularly from the opposite faces of wall portion 19. At the end of rib 20 there has been provided an extension 22 having a substantially circular cross-section. At the end of the rib 21 there have been provided wings 23 defining an opening for accommodating the extension 22 of an adjacent component 18.

Figure 11 shows two adjacent components 24 having ribs 25. The free end of a rib 25 of a component 24 fits into an U-shaped portion 26 of an adjacent component 24.

It will be clear, that when two or more components arranged adjacent each other as shown in figures 9-11 are pressed by using at least one heated pressing member as described above with respect to figures 1-6 there could be obtained a similar product as obtained by performing the above described method.

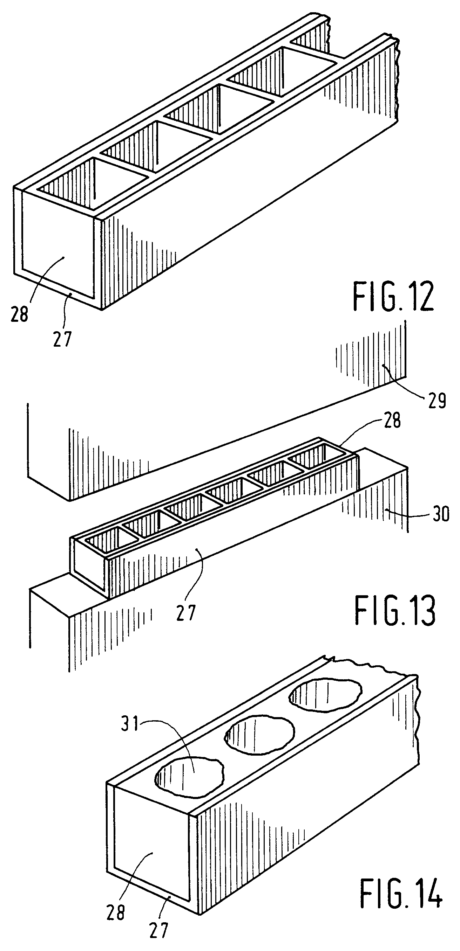

Figure 12 shows an arrangement comprising an U-shaped component 27 and a component 28 similar to a component 9 as described above and fitting between the parallel legs of the U-shaped component 27.

As shown in figure 13 such an arrangement of two adjacent components 27 and 28 can be arranged between two platens 29 and 30, at least the platen 29 being heated. By pressing said assembly 27, 28 between the platens 29, 30 the upper edges of the components 27, 28, seen in figure 12, can be fused and melted together, whereby the pressing can be done such, that the open upper ends of the channels defined in the component 28 are only partly closed so that are still openings 31 near said upper ends. Of course it wil also be possible to close the upper ends of said channels in the component 28 completely when the platens 29 and 30 are moved in a sufficient way towards each other.

So from the above it will be clear, that the components which are used to form a structural member according the present invention can have various shapes.

It is further within the scope of the present invention to place metal reinforcements or other reinforcements or other functional parts, e.g. formed by strips, e.g. along and/or between the wall portions 2-4, the wall portions 15-17, etc. Further such reinforcements or other functional parts could be arranged also along part of or along the complete outer circumference of the structural member formed from the components. Thereby the properties of the structural member could be further enhanced and/or the structural member thereby can fulfil other functions.

It it also within the scope of the invention to place decorative and/or functional films, nets, fibers etc., e.g. thin wood laminates, aluminium sheet, steel net, glass-fiber mat, on at least one side of the assembly formed e.g. from the components 9, and to fuse said components with said film together. Also it is possible to decorate and reinforce the structural member after the fusion of the components 9, whereby the use of adhesive bonding is allowed, provided the material used is suited for adhesive bonding.

## Claims

1. A method for manufacturing a structural member having two outer faces and a core between said outer faces, whereby the core comprises ribs extending between said outer faces and transverse to each other so as the define a plurality of channels between said outer faces, characterised by the steps of:
a) arranging adjacent each other at least two individual components (9, 14, 18 , 24, 27, 28) at least partly made of the thermoplastic material, whereby at least one of said components comprises a number of ribs (2-4: 15-17; 19-21), said ribs defining channels (5) which are open at at least one end,
b) placing said components between two pressing members (11, 12), whereby at least one of said pressing members is heated,
c) pressing said components at a side with open ends of the channels by means of the heated pressing member in such a way, that the parts of the components contacting the heated pressing member are melted, whereby the components are fused together and the ends of the channels are at least partly closed by deforming of the edges of the components contacting the heated pressing member.

2. A method according claim 1, characterised in, that a component is formed by extrusion.

3. A method according claim 1, wherein a component is formed by injection/compression molding.

4. A method according any of the preceding claims, wherein a component (9) comprises two substantially parallel wall portions (2, 3) and ribs (4) connecting said wall portions.

5. A method according any of claims 1-3, wherein there is used a component (14) having a wall portion (15) and ribs (16, 17) extending from opposite sides of said wall portion (15), the arrangement being such, that a rib (16) from one component which between two ribs (17) of a further similar component.

6. A method according claims 1-3, characterised in that there is used a component comprising a wall portion (19) with a rib (20) having a thickened protruding part fitting in a recess provided at the end of a rib (21) of a similar component (18).

7. A method according claim 1-3, characterised in that there is used a component (24) comprising a wall portion with an U-shaped part (26) for accommodating the end of a rib (25) of an adjacent component.

8. A method according claims 1-3 wherein in a component (27) having an U-shaped cross section there is arranged a component (28) having two substantially parallel wall portions and ribs extending between said wall portions.

9. A method according any of the preceding claims, characterised in that the components (9) are placed into a frame or fixture prior to be placed between the pressing members.

10. A method according any of the preceding claims, characterised in that components are adhesively bonded with each other at their touching surfaces.

11. A method according any of the preceding claims, characterised in that at leat one reinforcement and/or other functional part is incorporated into and/of between the components prior to placing the components between the pressing members.

12. A method according any of the preceding claims, characterised in that prior to the placement of the components between the pressing members, decorative or functional films, nets, fibers etc. are placed at least on one side of the components facing the pressing members.

13. A method according any of the preceding claims, characterised in that there is used at least one contoured pressing member.

14. A method according any of the preceding claims, characterised in that there is used a pressing member having at least one pin to enter or penetrate a component.

15. A method accordilg any of the preceding claims, characterised in that the heat and pressure to melt and fuse the edges of the individual components are applied in an continuous process, using a double belt press.

16. A method according any of the preceding claims, characterised in that the heat and pressure to melt and fuse the edges of the individual components are applied in a continuous process, using at least one pair of hot rolls.

17. A method according any of the preceding claims, characterised in that a temperature controlled calibrator and fixture are used to continuous feed the components ensuring a staggered alignment of the pre-assembly.
